# EUROPEAN PATENT APPLICATION

(11) **EP 1 315 098 A1**
(43) Date of publication of application: **28.05.2003**
(21) Application number: 01610122.2
(22) Date of filing: 27.11.2001
(51) Int. Cl.: G06F 17/30, G10L 15/26

(54) **Searching for voice messages**

(71) Applicant: Telefonaktiebolaget L M Ericsson (Publ), 126 25 Stockholm (SE)
(72) Inventor: Gustafsson, Harald, 223 63 Lund (SE); De Haan, Jan Mark, 372 37 Ronneby (SE)
(74) Representative: Boesen, Johnny Peder

(57) **Abstract**

A method of searching for a specific position in a voice message database (13) in an electronic device (1) comprises the steps of providing a speech sample, searching in the voice message database (13) for occurrences of speech samples similar to the provided speech sample, and indicating positions in which a speech sample similar to the provided speech sample occurs. By searching for the occurrence of a specific speech sample, e.g. in the form of one or a few key words, in the stored voice messages, the message or the position searched for can easily be found, even among a high number of stored messages, by choosing the speech sample appropriately. Further, the method can be used for all types of voice messages, i.e. phone calls, recorded lectures, shopping lists, etc.

## Description

### Technical Field of the Invention

The invention relates to a method of searching for a specific position in a voice message database in an electronic device. The invention also relates to an electronic device for retrieving voice messages, said device comprising a memory with a voice message database.

### Description of Related Art

Today many telecommunications devices, such as mobile phones or answering machines, include the possibility of storing voice communication, e.g. in the form of voice messages, telephone conversations, etc. The storage capacity of such devices is rapidly increasing. As an example, mobile phones having a storage capacity of up to five hours of voice communication are on the market.

Earlier the storage function has mainly been used to store small messages such as shopping lists, reminders of things to do, and other short messages. With the increasing storage capacity new possibilities for the use of the storage function will arise. As examples, it will be possible to record all business calls made with a mobile telephone, or students may want to record all lectures during a semester for later reference. Also dictating machines have the possibility of storing several hours of voice information.

With the increasing amount of voice information stored in a device it is a problem to retrieve a specific piece of the stored voice information for replay. Often the only help a user has in finding e.g. a specific memo in a mobile phone is generally the start time of the recording. This information is of little help when several hundreds of memos or telephone conversations of a total duration of several hours are stored in the device, because normally a user will not be able to remember when a specific memo was recorded.

US 5 572 576 suggests a solution to this problem for a telephone answering device in which the telephone number of a caller is stored together with the message he may leave on the device. Together with or instead of the phone number other information related to the phone number and already known to the device, e.g. the name of the caller, may be stored together with the message. Afterwards, messages can be selectively accessed by means of the stored list of the identity of callers. However, in order for the device to be able to store the number or the related information, the caller has to enter it himself by means of DTMF (Dual Tone Multi-Frequency), and not all persons can be expected to do that. A similar device is known from US 5 426 518 in which also the number of the message, the time and the duration of the message can be stored.

The provision of the identity of a caller may be a certain help in the location of a specific piece of stored voice information. However, for a normal user of e.g. a mobile telephone the stored messages will typically originate from a very limited number of persons, while the number of messages relating to each person may well be considerable. Therefore, the identity of the caller is not sufficient to locate the specific wanted message. Further, this method is only usable when the stored voice information actually originates from a remote telephone. It cannot be used for other types of information, such as recorded lectures or shopping lists.

Therefore, it is an object of the invention to provide a searching method of the above-mentioned type which is also effective in finding a specific message, or a specific position in a message, in the case of a high number of stored messages, and which can be used for all types of voice messages, i.e. it is not limited to e.g. voice messages originating from a remote telephone. Further, in case of e.g. a message from a remote telephone, it should not require an activity of the caller, such as entering his phone number.

### Summary

According to the invention the object is achieved in that the method comprises the steps of providing a speech sample, searching in the voice message database for occurrences of speech samples similar to the provided speech sample, and indicating positions in which a speech sample similar to the provided speech sample occurs. By searching for the occurrence of a specific speech sample, e.g. in the form of one or a few key words, in the stored voice messages, the message or the position searched for can easily be found, even among a high number of stored messages, by choosing the speech sample appropriately. Further, the method can be used for all types of voice messages, i.e. phone calls, recorded lectures, shopping lists, etc.

In one embodiment the method further comprises the steps of segmenting the provided speech sample into speech sound segments, and searching in the voice message database for occurrences of speech sound segments similar to the speech sound segments of the provided speech sample. By using speech sound segments a method which can be easily implemented is achieved, because analysis of speech sound segments is well known in the field of speech recognition.

In another embodiment the method further comprises the steps of providing a list of expected occurrences of different speech sound segments in normal speech, sorting the speech sound segments of the provided speech sample after normal occurrence by comparison with said list of expected occurrences, searching in the voice message database for occurrences of speech sound segments similar to the speech sound segment having the lowest normal occurrence, searching, when speech sound segments similar to the speech sound segment having the lowest normal occurrence are found, in parts of the voice message database adjacent thereto for occurrences of speech sound segments similar to the speech sound segment having the second lowest normal occurrence, and repeating the search iteratively by searching for occurrences of speech sound segments similar to the next speech sound segment, until a majority of the speech sound segments of the provided speech sample has been found. By looking first for the speech sound segment which is most unusual in normal speech, the searching time will be greatly reduced, which is important in case of a high number of stored voice messages.

When the step of searching for speech sound segments comprises comparing the speech sound segments of the provided speech sample to an index list indicating for each of a number of speech sound segments those positions in the voice message database in which it occurs, the searching time can also be reduced. The index list can expediently be updated during the recording of new messages, so that the list is ready when a search for a specific voice message is going to be performed.

An expedient embodiment is achieved when the method further comprises the step of performing said searching step by calculating a feature vector for each speech sound segment, and searching in the voice message database for occurrences of said feature vector, because circuitry for calculating and handling the feature vectors is well known and thus easy to implement.

When the voice message database comprises a number of voice messages, and the method further comprises the step of grading voice messages, in which a speech sample similar to the provided speech sample occurs, according to how many times the speech sample similar to the provided speech sample is found in the voice message, the user can easily choose the wanted voice message. Very often the message searched for is the one in which the speech sample occurs most frequently, and thus it is expedient to have this message presented at the top of the list.

When the method further comprises the step of indicating for the voice messages, in which a speech sample similar to the provided speech sample occurs, the start times of the occurrences of the similar speech sample, the user can choose to start playback of the message near the occurrence of the speech sample. Especially for long messages this can save a lot of time for the user.

In a preferred embodiment the speech sample is provided by uttering it through a microphone. Many devices of this type, such as e.g. mobile telephones, are already equipped with a microphone, and thus it is convenient to use this microphone as an input to the search. Alternatively, the speech sample may be provided by entering it in a text format to a text-to-speech interpreter. This embodiment is expedient for devices having a keyboard.

As mentioned, the invention also relates to an electronic device for retrieving voice messages, said device comprising a memory with a voice message database. When the device is further arranged to receive a speech sample, search in the voice message database in the memory for occurrences of speech samples similar to the received speech sample, and to indicate database positions in which a speech sample similar to the received speech sample occurs, the device is effective in finding a specific message, or a specific position, also in case of a high number of stored messages, and it can be used for all types of voice messages, i.e. it is not limited to e.g. voice messages originating from a remote telephone. Further, in case of e.g. a message from a remote telephone, it does not require an activity of the caller, such as entering his phone number.

By searching for the occurrence of a specific speech sample, e.g. in the form of one or a few key words, in the stored voice messages, the device can easily find the message or the position searched for, even among a high number of stored messages, when the speech sample is chosen appropriately. Further, the device can be used for all types of voice messages, i.e. phone calls, recorded lectures, shopping lists, etc.

In one embodiment, the device is further arranged to segment the received speech sample into speech sound segments, and search in the voice message database for occurrences of speech sound segments similar to the speech sound segments of the received speech sample. By using speech sound segments a device which can be easily implemented is achieved, because analysis of speech sound segments is well known in the field of speech recognition.

In another embodiment, the device is further arranged to provide a list of expected occurrences of different speech sound segments in normal speech, sort the speech sound segments of the received speech sample after normal occurrence by comparison with said list of expected occurrence, search in the voice message database for occurrences of speech sound segments similar to the speech sound segment having the lowest normal occurrence, search, when speech sound segments similar to the speech sound segment having the lowest normal occurrence are found, in parts of the voice message database adjacent thereto for occurrences of speech sound segments similar to the speech sound segment having the second lowest normal occurrence, and repeat the search iteratively by searching for occurrences of speech sound segments similar to the next speech sound segment, until a majority of the speech sound segments of the received speech sample has been found. By looking first for the speech sound segment which is most unusual in normal speech, the searching time will be greatly reduced, which is important in case of a high number of stored voice messages.

When the electronic device is further arranged to compare the speech sound segments of the received speech sample to an index list indicating for each of a number of speech sound segments those positions in the voice message database in which it occurs, the searching time can also be reduced. The device can expediently update the index list during the recording of new messages, so that the list is ready when a search for a specific voice message is going to be performed.

An expedient embodiment is achieved when the electronic device is further arranged to calculate a feature vector for each speech sound segment, and search in the voice message database for occurrences of said feature vector, because circuitry for calculating and handling the feature vectors is well known and thus easy to implement.

When the electronic device is further arranged to grade voice messages, in which a speech sample similar to the received speech sample occurs, according to how many times the speech sample similar to the received speech sample is found in the voice message, the user can easily choose the wanted voice message. Very often the message searched for is the one in which the speech sample occurs most frequently, and thus it is expedient to have this message presented at the top of the list.

When the electronic device is further arranged to indicate for voice messages, in which a speech sample similar to the received speech sample occurs, the start times of the occurrences of the similar speech sample, the user can choose to start playback of the message near the occurrence of the speech sample. Especially for long messages this can save a lot of time for the user.

In a preferred embodiment the electronic device is further arranged to receive a speech sample from a microphone. Many devices of this type, such as e.g. mobile telephones, are already equipped with a microphone, and thus it is convenient to use this microphone as an input to the search. Alternatively, the electronic device is further arranged to receive a speech sample from a text-to-speech interpreter. This embodiment is expedient for devices having a keyboard.

In an expedient embodiment of the invention, the electronic device comprises a mobile telephone.

### Brief Description of the Drawings

The invention will now be described more fully below with reference to the drawings, in which
figure 1 shows a device in which voice messages can be stored and searched for,
figure 2 shows a flow chart illustrating the searching process according to the invention,
figure 3 shows a flowchart in which several searching principles are combined, and
figure 4 shows a device in which a text-to-speech processor is used.

### Detailed Description of Embodiments

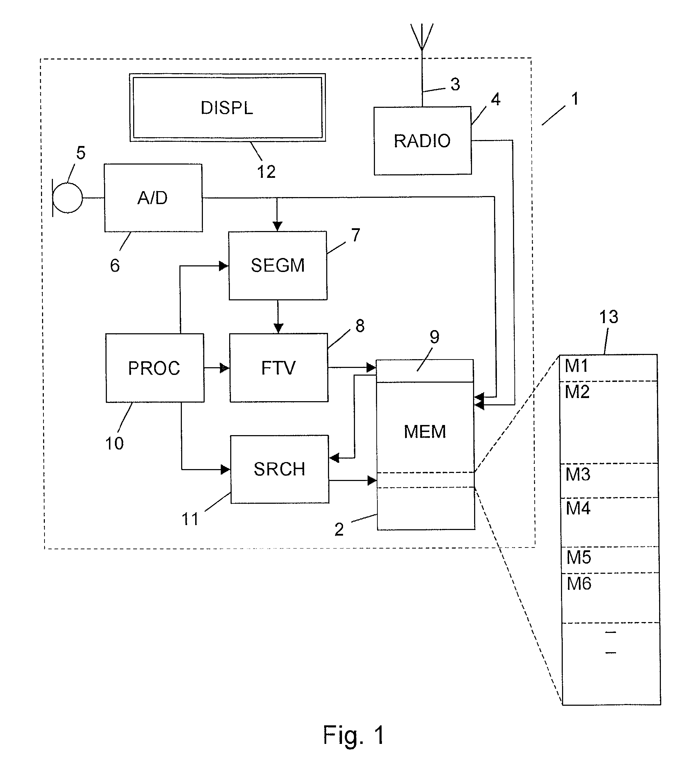

Figure 1 shows an example of a device in which the invention may be implemented. In the example the device is a mobile telephone 1, which can be a GSM telephone, a UMTS telephone or any other type of mobile telephone. The mobile telephone has a memory 2 in which voice messages or other voice information may be stored.

These messages may be messages received through the antenna 3 and the radio circuitry 4. Examples of such messages include a message left by a remote party when the telephone was not answered or a complete conversation recorded during a call. The messages are received and stored in a digital format.

Alternatively, a message to be stored in the memory can be received through the microphone 5 and the A/D conversion circuitry 6. This will be the case when the device is used as a dictating machine or used by e.g. a student for the recording of lectures during a semester. The A/D conversion circuitry 6 could typically comprise a sample-hold device and an analog-to-digital converter. In e.g. a GSM mobile telephone the sampling rate will typically be 8000 samples/s. As will be discussed later, the samples may be stored in the memory 2 in this form, or they may be processed further before they are stored. Thus also in this case the messages are stored in the memory 2 in a digital format.

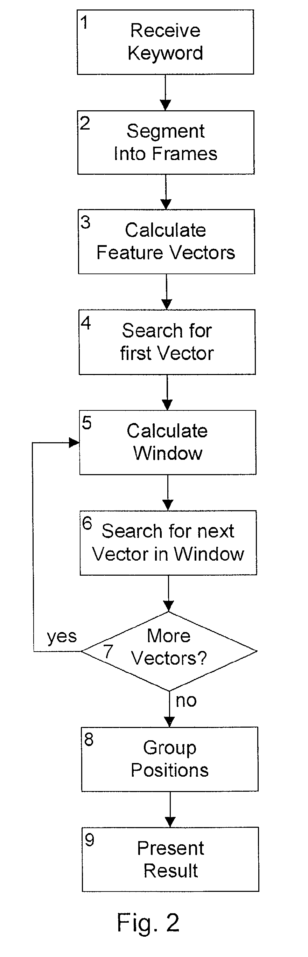

In figure 1 it is illustrated that the messages labelled M1 to M6 are stored in the memory, thus constituting a database 13. In addition to the labels M1, M2, etc. each stored message may be associated with further labels indicating e.g. the time or the location of the recording, or the telephone number of the remote party in case of a telephone call. When the user of the telephone wishes to find a specific stored message for replay, these labels may be used, but in case of a high number of stored messages or very long messages the labels will not be sufficient. This situation can be improved by use of the invention, as will be described by way of example below with reference to figure 1 and the flowchart of figure 2.

A user wishing to find a specific stored message, or a specific position in a longer message, for replay, pronounces one or a few words, which he expects to characterize the desired message, into the microphone 5. Such words will also be called keywords. The voice signal received by the microphone 5 is fed as an analog electrical signal to the A/D conversion circuitry 6 in which it is sampled, and each sample is converted to a digital signal. This is illustrated in step 1 of figure 2.

In step 2 the digital signal is then analysed and segmented into smaller segments, which takes place in the segmentation circuitry 7 of figure 1. The idea is to segment the signal into speech sounds. As an example the word "speech" could be segmented as /s/ /p/ /ee/ /ch/. In practice, however, the signal will typically be divided into segments of a fixed duration. The duration is chosen small enough for the samples in a segment to be approximately statistically stationary. For speech signals a duration of 10 to 30 ms is customary, and especially for mobile telephones the duration will typically be 20 ms. This segmentation is similar to the one performed in speech recognition analysis.

In step 3 a feature vector representing each segment is then calculated in the circuitry 8. The feature vector captures the information of the segment using only a few parameters. Several different types of feature vectors may be used. However, preferably a type which is robust to noise and channel effects should be selected. As an example cepstral coefficients derived from linear predictor coefficients are found to provide good results. The feature vectors calculated for the keyword are stored in the area 9 of the memory 2 as they are calculated.

It is noted that the segmentation circuitry 7 and the feature vector calculation circuitry 8 are controlled by a processor 10, and in a practical implementation these blocks may be realized in software.

Having calculated the feature vectors of the pronounced word(s) a searching block 11, which may also be implemented in hardware or software, can now start a searching routine to find similar feature vectors in the stored voice messages. In step 4 the first feature vector is searched for in all the messages stored in the memory 2. This search can be performed in different ways depending on how the messages were originally stored in the memory 2.

If the messages were originally stored in a format not including the above-mentioned feature vectors - and that will often be the case - feature vectors now have to be calculated for each segment of the stored voice information. Each calculated feature vector is then compared to the feature vector searched for using an error (difference) function. Segments having an error (difference) smaller than a specified largest error are accepted as the positions having a feature vector similar to the one searched for, and these positions are stored. Thus we now have the positions of segments having a feature vector similar to the first feature vector of the keyword(s).

However, it is quite time consuming, and requires a lot of calculation power, to calculate the feature vectors for each segment of the stored voice information during the search, and thus an alternative solution is to calculate the feature vectors at the time the voice information is originally stored and to store the feature vectors together with the digital values representing each segment. This solution of course requires more memory capacity because the original digital value as well as the corresponding feature vector has to be stored for each segment, but the result is that the search procedure is speeded up considerably. In this case we just have to compare the feature vector searched for with the stored feature vectors calculated earlier for the stored voice information using the above-mentioned error function to find the positions of segments having a feature vector similar to the first feature vector of the keyword(s).

Instead of storing the original digital value as well as the corresponding feature vector for each segment it is also possible to store only the feature vectors, possibly with some extra speech signal information. Since the feature vectors, at least to a certain extend, capture the information of the segments, it is possible to regenerate the voice message from the feature vectors, although the sound quality with today's technology will not be perfect.

Having found the positions of segments in the stored voice messages having a feature vector similar to the first feature vector of the pronounced keyword(s), the next step would be to repeat the search to find segments with a feature vector similar to the next feature vector of the keyword. However, it is normally not necessary to perform this search over the full amount of stored voice information, i.e. all stored messages. If a word searched for actually exists in a message, all feature vectors of the pronounced keyword are expected to be found in the vicinity of each other, and thus the searching time may be reduced by limiting the search to the vicinity of the positions already found. Therefore, in step 5 a searching window around each of the previous positions is calculated. Since this step is going to be repeated for each feature vector of the pronounced keyword, the window can, more generally, be calculated by for example excluding all areas that are not in the vicinity of hits of all the previous feature vectors, or a more generous (and robust) window may accept that most of the previous searches have generated hits in the vicinity.

The window is a way of specifying which segments are being used in a search, which may be non-continuous. In an implementation example the window may include all the positions from previous searches, except those that are not in the vicinity of the positions of the latest search. A more generous and robust method may delay the exception process by one or more iterations in the search process. As an example also the second feature vector searched for may have a window covering the whole signal, and the third feature vector may have a window covering the whole signal, except the positions which are not in the vicinity of the positions of the second search, and so on. The vicinity function may be implemented by allowing segments that are within a factor of the duration of the keyword signal. A more advanced vicinity function may also compensate for the position of the feature vector searched for within the keyword. If the feature vector e.g. is in the beginning of the keyword, the vicinity function will allow more segments after its position compared to before its position. If the feature vectors are not searched for in their natural order, an even more advanced vicinity function could also be restricted to allow only positions that are between positions of other already found feature vectors, if that order can be found in the keyword signal.

When the window has been defined, the search for the next feature vector is performed in step 6. The search itself is performed in the same way as the search for the first feature vector in step 4, i.e. using the error function to decide whether a feature vector is similar to the one searched for. Again the found positions are stored.

In step 7 it is checked whether all feature vectors in the pronounced keyword have been searched for. If this is not the case, steps 5 and 6 are repeated for the next feature vector as described above.

When all feature vectors, or at least most of them, have been searched for, the feature vector positions found are grouped in areas that contain all (or most of) the feature vectors within a specified range and in the same order as the feature vectors have in the pronounced keyword. This is illustrated in step 8. When we have the positions of the feature vectors, where all or most of the feature vectors in the keyword are in the vicinity of each other according to the vicinity function, the next step is to group feature vector positions that belong to the same keyword. This process is started by sorting out all positions where the feature vectors are in the wrong order compared to the keyword signal. The vicinity function is also used to accomplish this. A group is then formed when most of the feature vectors exist within a factor of the duration of the keyword.

When the positions are grouped, a check for extra items may be performed. This can be a check for non-speech segments after and before the keyword if the user has selected a single word. Further, the groups may be sorted according to the mean square error between the found feature vectors in the voice message signals and the feature vectors in the keyword. This sorting is dependent on the error function.

Finally, in step 9 the result of the search is presented to the user, e.g. on the display 12 of the mobile telephone 1. The result may be presented as a list of messages - or positions in a message - containing the pronounced keyword(s). Preferably, the messages are presented on a scale graded according to how many times the keyword(s) are found in each message.

The user may then select a message from the list for replay. When a message is selected, a more specified list of the start times of the keywords in the selected message may be shown, which enables playback starting from a specific occurrence of the keyword in the message. This is useful for long messages, e.g. when a whole lecture has been recorded.

In step 4 above the search for feature vectors was initiated by searching for feature vectors similar to the first feature vector of the pronounced keyword(s). The first feature vector can of course be the first one in the order the features were calculated in step 3, i.e. in the order the sound segments were pronounced. However, the search can be improved by sorting the feature vectors before the search is initiated.

As an example, the feature vectors can be sorted according to how unusual they are in the relevant language. For a given language (or a given region) it is possible to calculate how often the different feature vectors typically occur in that language and to store this information in the device. If the language spoken is not known, a standard worldwide distribution of feature vectors may be used. Distributions for a number of languages may be stored in the device from the factory, or they may be calculated and stored in the use of the device. The calculation of this feature vector distribution of the language is described below.

The probability of occurrence of a feature vector can be estimated from a large speech corpus with speech signals that are representative for a specific language or region (including the whole world). The speech signals are first divided into segments, and each segment is associated with a speech feature vector, similar to the process described above. The estimation can then be accomplished by e.g. applying a vector quantifier on the corpus. The vector quantifier can estimate which feature vectors (finite number of feature vectors) that will best represent all feature vectors in the corpus, i.e. with the smallest quantification error according to some specified error function. Then the probability of occurrence of each quantified feature vector can be calculated by the probability of mapping a feature vector in the corpus to a quantified feature vector statistically over the corpus.

When the feature vector distribution in the language is known, the feature vectors calculated for a pronounced keyword can easily be sorted according to how unusual they are in the relevant language, and the above search procedure can then be improved by searching first (in step 4) for the most unusual feature vector of the keyword. Since the most unusual feature vector will typically only have a few occurrences in the stored voice messages, the number of windows in which the subsequent searching steps have to be performed, is reduced. Next the second most unusual feature vector is searched for (in step 6), and this procedure is repeated iteratively.

Thus, in figure 2, a step in which the calculated feature vectors are sorted according to their probability of occurrence can be added between steps 3 and 4, and in step 4 the first feature vector will then be the most unusual feature vector.

The feature vectors calculated for the pronounced key-word(s) may also be sorted according to other criteria before the search is initiated. Thus another example would be to sort the vectors according to their occurrence in the pronounced keyword and then start the search by looking for feature vectors in the stored messages similar to the feature vector having the highest number of occurrences in the keyword (in step 4). Next the feature vector having the second highest number of occurrences in the keyword is searched for (in step 6), and this procedure is repeated iteratively.

As mentioned above, feature vectors may be calculated and stored together with (or instead of) the digital value representing each sound segment when the voice message is originally stored or recorded in the device. In this case it is also possible to generate an index of feature vectors during the recording of the voice messages. For each feature vector, this index lists its occurrences in the stored messages, i.e. the segment numbers in which that feature vector occurs. Such an index can simplify the above search routine further. Instead of searching all the stored voice messages to find a feature vector of the pronounced keyword, the index will directly provide the occurrences of that feature vector, and thus a lot of searching time can be saved. If an index is used it may not be necessary to save the feature vectors since all necessary search information can be found in the index.

To generate the index the signals are analysed during the recording of the voice messages, and the feature vector of each segment is mapped to a finite number of quantified feature vectors that constitute the index bins. The index is a database which, for each quantified feature vector (bin), keeps track of which signal segments are mapped to that bin.

Instead of generating a full index, which will occupy a large amount of memory space, a partial index can be generated, i.e. an index comprising a subset of the possible feature vectors instead of all possible feature vectors. Preferably, this partial index should then comprise feature vectors in the middle of the list indicating how unusual a given feature vector is in the language, in the case where such a list has been provided as described above. The reason for this is that the most rare feature vectors of the language will also only rarely occur in a keyword, and thus they will only rarely be searched for, while the most common feature vectors of the language will occur so often in the stored voice messages that an occurrence provides almost no information about the location of a keyword.

When only a partial index exists, it is checked for a given feature vector to be searched for, whether it is in the index or not. If it is in the index the information is taken therefrom; otherwise the feature vector is searched for in the normal way as described earlier.

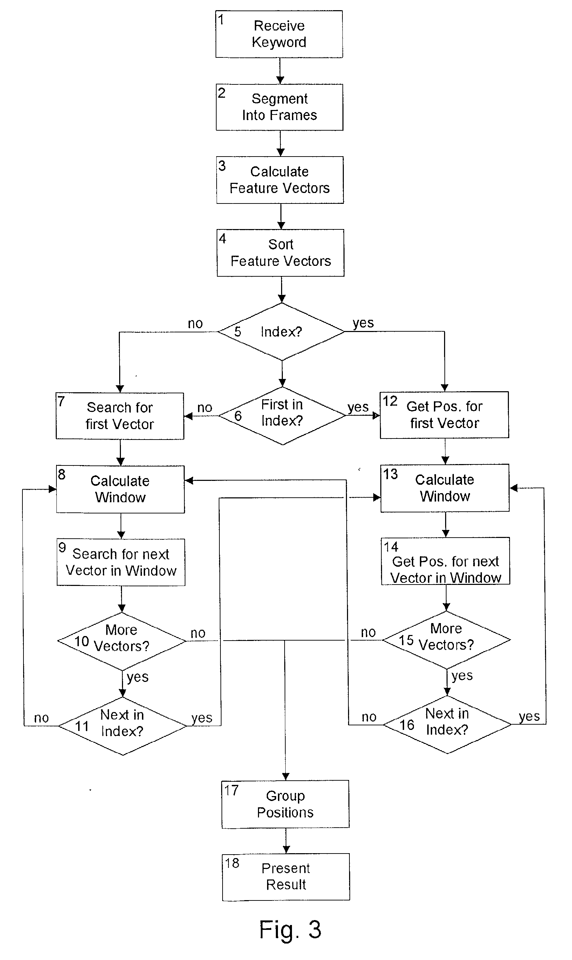

Figure 3 shows a flowchart in which some of the above possibilities have been combined. In this case feature vectors have been stored together with (or instead of) the digital values representing each segment of the voice messages when they were originally stored. Further, at least a partial index of feature vectors is supposed to have been generated and stored at the same time, and a list indicating how unusual each possible feature vector is in the relevant language is also supposed to be stored in the device.

Steps 1 to 3 correspond to the same steps of figure 2.

In step 4 the calculated feature vectors are sorted according to how unusual they are in the language.

In step 5 it is checked whether an index of the feature vectors in the stored messages exists. If so, an index search will be performed; if not, a normal search for the feature vectors is performed over the stored messages as described above. If a partial index exists, it will be checked for each feature vector whether an index exists for that vector.

In step 6 it is checked whether the first (i.e. the most unusual) feature vector is found in the index, and the search is then continued in dependence of the result.

In step 7 the first (i.e. the most unusual) feature vector is searched for in all stored voice messages, as was described in step 4 of figure 2. Similarly, steps 8 to 10 correspond to steps 5 to 7 of figure 2. If all feature vectors have not yet been searched for (step 10), it is checked in step 11 whether the next feature vector is in an index. If this is the case, the search is continued as an index search; otherwise step 8 is repeated.

If it was decided in step 5 or step 6 that at least the first feature vector to be searched for is in an index, the positions of that feature vector are obtained from the index in step 12. Like in step 8 a window for the next search is then calculated in step 13, and the position of the next feature vector is obtained from the index in step 14.

If all feature vectors have not yet been searched for (step 15), it is checked in step 16 whether the next feature vector is in an index. If this is the case, step 13 is repeated; otherwise the search is continued as a normal search according to steps 8 and 9.

When all feature vectors have been searched for, the found positions are grouped in step 17 and the results are presented in step 18. These steps correspond to steps 8 and 9 of figure 2.

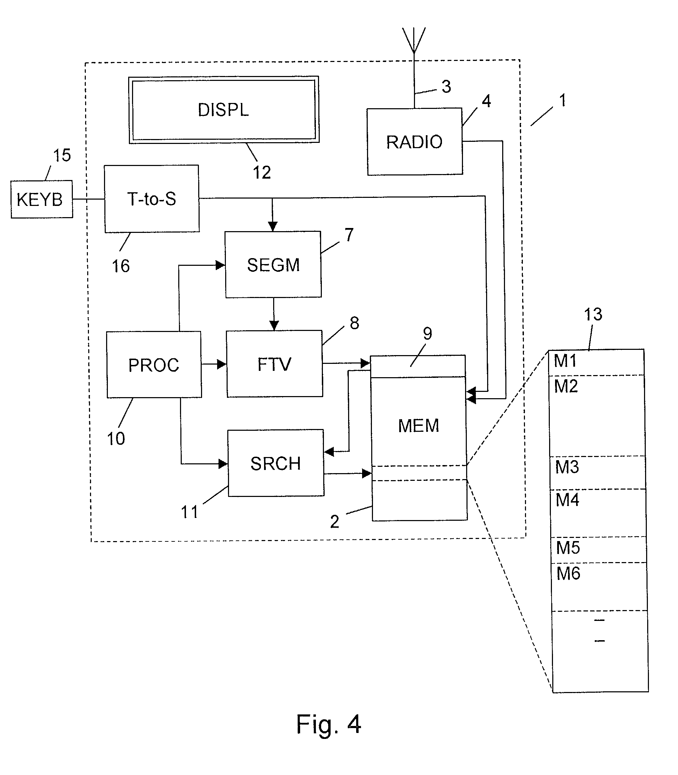

In figure 1 the pronounced keyword is received by the microphone 5. Instead of pronouncing the keyword, a text-to-speech processor or interpreter may be used. This is illustrated in figure 4. A keyword is typed on the keyboard 15 and the output signal from the keyboard is connected to the text-to-speech processor 16 which is used as a pre-processor for the process described above. The text-to-speech processor 16 converts text input to a speech signal. Text-to-speech synthesis is well described in the literature. The text-to-speech processor 16 may also be designed to output feature vectors directly, and in that case the segmentation circuitry 7 and the feature vector calculation circuitry 8 may be avoided and the output of the processor 16 connected to the area 9 of the memory 2.

Above, the electronic device is a mobile telephone. However, it is noted that other types of electronic devices can be used as well. Examples include other types of telephones and dictating machines.

Although a preferred embodiment of the present invention has been described and shown, the invention is not restricted to it, but may also be embodied in other ways within the scope of the subject-matter defined in the following claims.

## Claims

1. A method of searching for a specific position in a voice message database (13) in an electronic device (1), **characterized in that** the method comprises the steps of:
• providing a speech sample,
• searching in the voice message database (13) for occurrences of speech samples similar to the provided speech sample, and
• indicating positions in which a speech sample similar to the provided speech sample occurs.

2. A method according to claim 1, **characterized in that** it further comprises the steps of:
• segmenting the provided speech sample into speech sound segments, and
• searching in the voice message database (13) for occurrences of speech sound segments similar to the speech sound segments of the provided speech sample.

3. A method according to claim 2, **characterized in that** it further comprises the steps of:
• providing a list of expected occurrences of different speech sound segments in normal speech,
• sorting the speech sound segments of the provided speech sample after normal occurrence by comparison with said list of expected occurrences,
• searching in the voice message database (13) for occurrences of speech sound segments similar to the speech sound segment having the lowest normal occurrence,
• searching, when speech sound segments similar to the speech sound segment having the lowest normal occurrence are found, in parts of the voice message database (13) adjacent thereto for occurrences of speech sound segments similar to the speech sound segment having the second lowest normal occurrence, and
• repeating the search iteratively by searching for occurrences of speech sound segments similar to the next speech sound segment, until a majority of the speech sound segments of the provided speech sample has been found.

4. A method according to claim 2 or 3, **characterized in that** the step of searching for speech sound segments comprises:
• comparing the speech sound segments of the provided speech sample to an index list indicating for each of a number of speech sound segments those positions in the voice message database (13) in which it occurs.

5. A method according to any one of claims 2 to 4, **characterized in that** it further comprises the step of:
• performing said searching step by calculating a feature vector for each speech sound segment, and searching in the voice message database (13) for occurrences of said feature vector.

6. A method according to any one of claims 1 to 5, **characterized in that**
• the voice message database (13) comprises a number of voice messages (M1 to M6), and
• the method further comprises the step of grading voice messages, in which a speech sample similar to the provided speech sample occurs, according to how many times the speech sample similar to the provided speech sample is found in the voice message.

7. A method according to claim 6, **characterized in that** it further comprises the step of:
• indicating for the voice messages, in which a speech sample similar to the provided speech sample occurs, the start times of the occurrences of the similar speech sample.

8. A method according to any one of claims 1 to 7, **characterized in that** it further comprises the step of:
• providing said speech sample by uttering it through a microphone (5).

9. A method according to any one of claims 1 to 7, **characterized in that** it further comprises the step of:
• providing said speech sample by entering it in a text format to a text-to-speech processor (16).

10. An electronic device (1) for retrieving voice messages, said device comprising a memory (2) with a voice message database (13),
**characterized in that** the device is further arranged to:
• receive a speech sample,
• search in the voice message database (13) in the memory for occurrences of speech samples similar to the received speech sample, and
• indicate database positions in which a speech sample similar to the received speech sample occurs.

11. An electronic device according to claim 10, **characterized in that** it is further arranged to:
• segment the received speech sample into speech sound segments, and
• search in the voice message database (13) for occurrences of speech sound segments similar to the speech sound segments of the received speech sample.

12. An electronic device according to claim 11, **characterized in that** it is further arranged to:
• provide a list of expected occurrences of different speech sound segments in normal speech,
• sort the speech sound segments of the received speech sample according to normal occurrence by comparison with said list of expected occurrence,
• search in the voice message database (13) for occurrences of speech sound segments similar to the speech sound segment having the lowest normal occurrence,
• search, when speech sound segments similar to the speech sound segment having the lowest normal occurrence are found, in parts of the voice message database (13) adjacent thereto for occurrences of speech sound segments similar to the speech sound segment having the second lowest normal occurrence, and
• repeat the search iteratively by searching for occurrences of speech sound segments similar to the next speech sound segment, until a majority of the speech sound segments of the received speech sample has been found.

13. An electronic device according to claim 11 or 12, oharacterized in that it is further arranged to:
• compare the speech sound segments of the received speech sample to an index list indicating for each of a number of speech sound segments those positions in the voice message database (13) in which it occurs.

14. An electronic device according to any one of claims 11 to 13, **characterized in that** it is further arranged to:
• calculate a feature vector for each speech sound segment, and search in the voice message database (13) for occurrences of said feature vector.

15. An electronic device according to any one of claims 10 to 14, **characterized in that** it is further arranged to:
• grade voice messages, in which a speech sample similar to the received speech sample occurs, according to how many times the speech sample similar to the received speech sample is found in the voice message.

16. An electronic device according to claim 15, **characterized in that** it is further arranged to:
• indicate for voice messages, in which a speech sample similar to the received speech sample occurs, the start times of the occurrences of the similar speech sample.

17. An electronic device according to any one of claims 10 to 16, **characterized in that** it is further arranged to receive a speech sample from a microphone (5).

18. An electronic device according to any one of claims 10 to 16, **characterized in that** it is further arranged to receive a speech sample from a text-to-speech processor (16).

19. An electronic device according to any one of claims 10 to 16, **characterized in that** it comprises a mobile telephone.
